# EUROPEAN PATENT SPECIFICATION

(11) **EP 4 230 393 B1**
(45) Date of publication and mention of the grant of the patent: **04.12.2024**
(21) Application number: 23157987.1
(22) Date of filing: 22.02.2023
(51) Int. Cl.: B29D 30/06

(54) **3D BLADE FOR FORMING KERF**
3D-KLINGE ZUR FORMUNG EINER KERBE
LAME 3D POUR FORMER UNE ENTAILLE

(30) Priority: 22.02.2022 KR 20220022715
(43) Date of publication of application: 23.08.2023
(73) Proprietor: HANKOOK TIRE & TECHNOLOGY CO., LTD, Gyeonggi-do 13494 (KR)
(72) Inventor: IHM, Jae Wook, Sejong-si 30100 (KR); CHOI, Su Bin, Yuseong-gu Daejeon 34127 (KR)
(74) Representative: Stöckeler, Ferdinand

(56) References cited:
- EP-A2- 3 187 346
- KR-B1- 101 917 494
- US-A1- 2003 201 048

## Description

### CROSS REFERENCE TO RELATED APPLICATION

The present application claims priority to Korean Patent Application No. 10-2022-0022715, filed February 22, 2022

### BACKGROUND OF THE INVENTION

### Field of the Invention

The present invention relates to a 3-dimensional (3D) kerf-forming blade for use in a tire vulcanization process, and more particularly, to a technique for minimizing the deformation of the shape of a kerf during tire vulcanization by improving the durability of the blade.

### Description of the Related Art

A pneumatic tire is composed of an inner liner, a body ply layered outside the inner liner, a belt layered outside the body ply, a tread layered outside the belt, and sidewalls that make up both sides of the tire, as well as a bead that joins with the wheel.

Additionally, the tread that comes into contact with the road is formed with specific patterns for grip, water drainage, braking power, and noise dispersal, and the shape of these patterns greatly affects wet grip, snow grip, and handling performance, making it a crucial factor in tire development. Kerf is a narrow, deeply-cut groove primarily in the tread blocks with a width of less than 1 mm, evenly distributing the contact surface and enhancing grip while providing a comfortable ride through damping action. Additionally, it also promotes drainage, which enhances driving power and braking power.

Recently, the trend in tire tread pattern design is to prioritize performance over simple design and appearance. To enhance tire performance, pattern performance technology is undergoing detailed subdivision and refined modifications.

Due to these changes, the thickness and shape of the kerf applied to tires has become diverse, leading to improved dry and wear performance. However, in order to achieve interlocking between blocks during tire operation, the thickness of the kerf must be reduced to improve the tire's dry performance, but it comes with a trade-off of reduced snow and ice performance as the thickness of the kerf becomes thinner. Additionally, as the thickness of the kerf becomes thinner, the possibility of the kerf being warped or broken during tire manufacturing may greatly increase.

Korean Registered Patent No. 10-1917494 (Title of Invention: Kerf molding blade of tire vulcanization mold and vehicle tire and tire vulcanization apparatus using the same) discloses a curved molding blade in which a kerf-forming concave-convex portion 20 is formed on a blade frame 10, a transverse protrusion 30 is formed at the lower portion of the kerf-forming concave-convex portion 20, the transverse protrusion 30 includes a transverse concave portion 40 on the inside while the kerf-forming concavo-convex portion 20 and the transverse protrusion 30 are spaced apart from the lower end of the blade frame 10 by a predetermined distance such that the lowermost end of the transverse protrusion 30 is located at a point spaced apart from the lower end of the blade frame 10 by 15 to 40% of the height L of the blade frame, the height L1 of the transverse protrusion 30 is formed at 15 to 25 % of the height L of the blade frame 10 to adjust the block rigidity to improve the grip required in driving on snow and ice roads, and The height L2 from one end of the transverse protrusion 30 to the upper end of the blade frame 10 is 45 to 60 % of the height L of the blade frame 10 to adjust the block stiffness so as to be used on dry roads, improving driving performance.

### Documents of Related Art

(Patent Document 1) Korean Patent Registration No. 10-1917494

### SUMMARY OF THE INVENTION

The present invention aims to solve the above problems by minimizing the deformation of the kerf's shape by enhancing the durability of the blade used in forming the kerf during tire vulcanization.

The technical objects of the present invention are not limited to the aforesaid, and other objects not described herein with be clearly understood by those skilled in the art from the descriptions below.

In order to achieve the above objects, a 3-dimensional (3D) blade being installed in a tire vulcanization mold for forming a kerf according to the present invention includes a frame formed in a shape of a plate having a wave shape in a cross-section horizontal to a thickness direction and a support formed in a shape of a bar having one side connected to the frame and the other side connected to another frame, wherein the support prevents the frame from being deformed during a process of vulcanizing a tire.

According to an embodiment of the present invention, the support may include a main support body having a shape of a bar and a connecting member formed between the main support body and the frame to connect the main support body and the frame.

According to an embodiment of the present invention, the main support body may have a cross section in the shape of a circle or a polygon.

According to an embodiment of the present invention, the cross section of the main support body may be a circle having a radius of 0.3 to 1.0 millimeters (mm).

According to an embodiment of the present invention, the main support body and the connecting member may include a connecting portion having a curvature surface formed having a predetermined curvature radius.

According to an embodiment of the present invention, the curvature radius of the connecting portion of the main support body and the connecting member may range from 0.3 to 1.0 millimeters (mm).

According to an embodiment of the present invention, the main support body may be connected on the outside to an outer plane of the connecting member.

According to an embodiment of the present invention, the frame may include at least one amplitude portion formed by burying a part of one surface and protruding a part of the other surface correspondingly.

According to an embodiment of the present invention, the frame may further include a slope portion formed at a connecting portion between the amplitude portion and the support.

According to an embodiment of the present invention, the frame may further include a plate portion connected to an end of the amplitude portion and formed in a plate shape.

According to an embodiment of the present invention, the frame may have a thickness equal to or greater than 0.2 mm.

### BRIEF DESCRIPTION OF THE DRAWINGS

FIG. 1 is a perspective view of a blade according to an embodiment of the present invention;
FIG. 2 is a front view of a blade according to an embodiment of the present invention;
FIG. 3 is a schematic diagram of a main support and a connector according to an embodiment of the present invention;
FIG. 4 is a perspective view of a block according to an embodiment of the present invention;
FIG. 5 is a plan view of a block according to an embodiment of the present invention;
FIG. 6 is a side view of a block according to an embodiment of the present invention;
FIG. 7 is a perspective view of a block according to another embodiment of the present invention;
FIG. 8 is a side view of a block according to another embodiment of the present invention;
FIGS. 9 and 10 are perspective views of a block according to a comparative example of the present invention;
FIG. 11 is a graph according to simulation test result for each tire block;
FIG. 12 is a table summarizing data according to simulation test results for each tire block; and
FIGS. 13 to 15 are images related to the stress concentration test for blades according to each embodiment of the present invention.

### DETAILED DESCRIPTION OF THE INVENTION

Hereinafter, the present invention will be described with reference to the accompanying drawings. However, the present invention may be embodied in many different forms and is not limited to the embodiments described herein. In order to clearly describe the present invention, parts irrelevant to the description may be omitted in the drawings, and similar reference numerals may be used for similar components throughout the specification.

Throughout the specification, when a part is said to be "connected (coupled, contacted, or combined)" with another part, this is not only "directly connected", but also "indirectly connected" with another member in between. Also, when a part is said to "comprise" a certain component, this means that other components may be further included instead of excluding other components unless specifically stated otherwise.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" or "has," when used in this specification, specify the presence of a stated feature, number, step, operation, component, element, or a combination thereof, but they do not preclude the presence or addition of one or more other features, numbers, steps, operations, components, elements, or combinations thereof.

Hereinafter, the present invention will be described in detail with reference to the accompanying drawings.

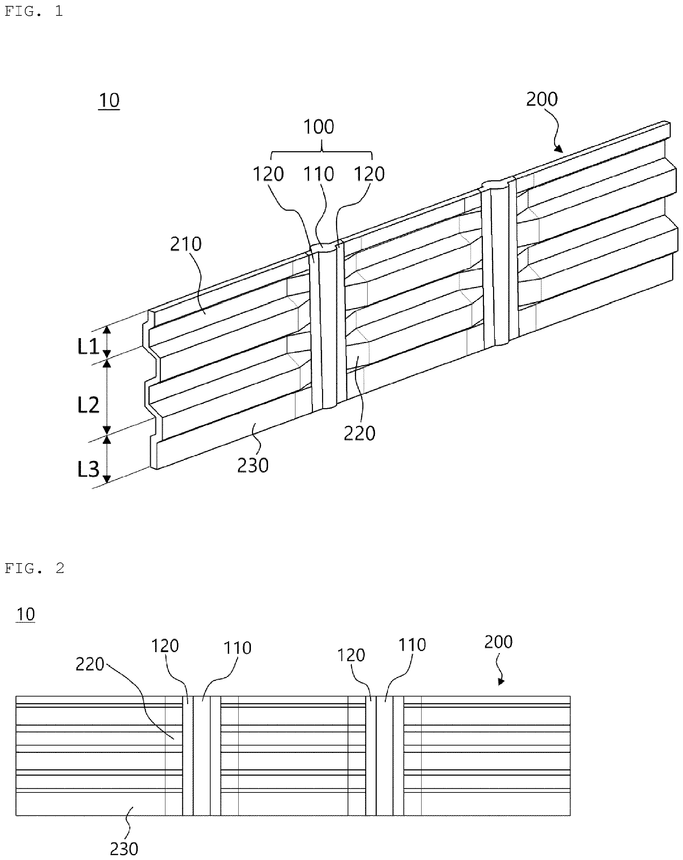

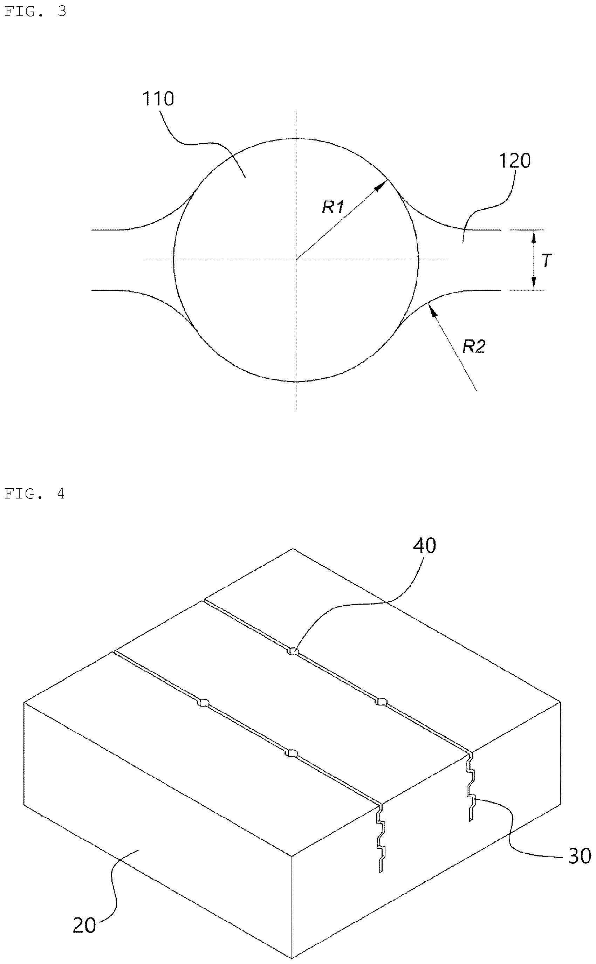

FIG. 1 is a perspective view of a blade 10 according to an embodiment of the present invention, and FIG. 2 is a front view of a blade 10 according to an embodiment of the present invention. And FIG. 3 is a schematic diagram of a main support body 110 and a connecting member 120 according to an embodiment of the present invention.

As shown in FIGS. 1 to 3, the 3D kerf-forming blade 10 installed in a tire vulcanization mold for use in molding the kerf 30 according to the present invention includes a frame 200 having the shape of a plate with a wave-like cross-section in the horizontal direction relative to its thickness and a support 100 having the shape of a bar that is connected on one side to one frame 200 and on the other side to another frame 200.

Here, during the vulcanization molding process for the tire, deformation of the frame 200 may be prevented by the support 100. Here, the thickness of the frame 200 may be 0.2 mm or more. Since the frame 200 is formed with a thin thickness as described above, it is possible to form fine and various kerfs 30 on the tire. However, the thickness of the frame 200 is not limited to the above dimensions.

In the case where the frame 200 is formed with a fairly thin thickness as described above, the blade 10 is likely to have deformation or damage such as distortion, warping, or breakage due to such a thin thickness of the frame 200, resulting in defects in the shape of the kerf 30 formed on the tire.

In order to prevent this phenomenon, the support 100 is disposed between two frames 200 to support each frame 200, which improves the durability of the blade 10 of the present invention and prevents deformation of the frame 200 due to pressure and heat during tire vulcanization, making it possible for the kerf 30 to be formed in proper shape on the tire.

In detail, the blade 10 with only the frame 200 experiences bending at a force of 65-70 N when force is applied using a push-pull gauge, whereas the blade 10 of the present invention, which has the support 100, may remain unbent even at forces exceeding 100 N.

The support 100 may include a main support body 110 formed in the shape of a bar and connecting members 120 formed between the main support body 110 and the frames 200 to connect the main support body 110 and the frames 200. Here, the cross-section of the main support body 110 may be circular or polygonal. However, the shape of the cross-section of the main support body 110 is not limited to these shapes and other shapes such as elliptical may also be used.

The connecting member 120 may take the form of an extension from both sides of the main support body 110 towards the frames 200 in a plate shape. However, the shape of the connecting body 120 is not limited thereto, but may also be formed in other shapes.

The main support body 110 may have a circular cross-sectional shape, and in this case, the radius R1 of the cross-section of the main support body 110 may be 0.3 to 1.0 mm. In addition, as shown in FIG. 3, the connecting part between the main support body 110 and the connecting member 120 may have a curved surface.

In detail, the connecting part of the main support body 110 and the connecting member 120 may undergo rounding treatment, with the thickness T of the connecting member 120 gradually increasing towards the main support body 110, resulting in a predetermined radius of curvature R2 for the connecting part of the support 110 and the connecting member 120.

By performing the curved surface treatment on the connection part between the main support body 110 and the connecting member 120 as described above, stress concentration at the connecting part may be avoided, which enhances the durability of the blade 10.

Here, the radius of curvature R2 at the connecting part between the main support body 110 and the connecting member 120 may be 0.3 to 1.0 mm. When the radius of curvature R2 at the connecting part between the main support body 110 and the connecting member 120 is formed simultaneously along with the radius R1 of the cross section of the main support body 110 as described above, the horizontal strength at the connecting part is increased, resulting in enhancing the durability of the blade.

For the above configuration, it may be preferred for the radius of curvature R2 at the connecting part between the main support body 110 and the connecting member 120 to be formed as 0.6 mm, and for the radius of curvature R2 at the connecting part between the main support body 110 and the connecting member 120 to be formed as 0.5 mm. And the thickness T of the connecting member 120 may be 0.2 to 0.4 mm.

The connecting part between the main support body 110 and the connecting member 120 may have a curved surface as described in the embodiment, but the present invention is not limited thereto, and the outer surface of the main support body 110 and the outer plane of the connecting member 120 may be directly connected. This applies even when the cross-section of the main support body 110 is a circle or any other shape.

In this case, the connecting member 120 may be formed as a plate shape and extended from the outer surface of the main support body 110 to form a straight section directly in the direction of the extension of the connecting member 120 from the outer surface of the main support body 110.

The formation of the connecting member 120 as described above enhances the coupling force between the main support body 110 and the frame 200, and the connecting member 120, being formed to support the main support body 110, may increase the resistance of the main support body 110 to external forces.

The bar (or rod) shape of the main support body 110 and the wave shape of the frame 200 may increase the pulling force, or the force exerted when the blade 10 of the present invention is inserted into and withdrawn from a tire during the tire vulcanization. In addition, forming the cross-sectional shape of the amplitude portion 210, which creates the wave shape as described, into a trapezoidal shape may further increase the pulling force.

As described above, forming the connecting members 120 on both sides of the main support body 110 facilitates the sliding of the blade 10 of the present invention on the tire when it is separated from the tire after the tire vulcanization, reducing the pulling force increased by the bar (or rod) shape of the main support body 110, the wave shape of the frame 200, and the trapezoidal shape of the amplitude portion 210, thereby increasing the efficiency of pulling out the blade 10 from the tire after the tire vulcanization.

The frame 200 may have at least one amplitude portion 210 formed by burying a part of one surface and protruding a part of the other surface correspondingly. Furthermore, a slope portion 220 may be formed at the junction between the amplitude portion 210 and the support 100. Here, the slope portion 220 may have at least one inclined surface.

As shown in FIGS. 1 and 2, a plurality of amplitude portions 210 forming a wave shape, i.e., a zigzag-shaped amplitude shape, are formed in the frame 200, and each of the amplitude portions 210 may be connected to form the wave shape.

The cross-sectional shape of the amplitude portion 210 may be formed as a trapezoid as described above, but it is not limited to this shape and various shapes such as a semicircle may be used.

Since the frame 200 has a wave shape formed by the amplitude portions 210, a gap may occur between the amplitude portions 210 and the support 100. In detail, as one end of the amplitude portion 210, which is attached to the connecting member 120, is separated from the connecting member 120, the slope portion 220 may be formed between the separated portion and the connecting member 120.

Here, the slope portion 220 may be formed to extend from the amplitude portion 210 while being inclined toward the connecting member 120 and coupling the amplitude portion 210 and the connecting member 120 without separation between one end of the amplitude portion 210 and the connecting member 120, which increases the coupling force between the amplitude portion 210 and the connecting member, leading to an increased shape retention force of the blade 10 of the present invention against external forces.

The frame 200 may further include a plate-shaped portion 230 coupled to the end of the amplitude portion 210 and formed in a plate shape. In detail, with reference to FIGS. 1 and 2, a plate-shaped portion 230 may be formed at the bottom of the blade 10 of this invention, specifically at the bottom of the frame 200.

Such a plate-shaped portion 230 may be coupled to the tire vulcanization mold for vulcanizing the tire, thus the plane of the plate-shaped portion 230 and the tire vulcanization mold are coupled, enhancing the coupling strength of the blade 10 of the present invention to the tire vulcanization mold.

In addition, by extending the support 100 to form the plate-shaped portion 230, the main support body 110 and the connecting body 120 also support the plate-shaped portion 230, thereby increasing the coupling strength of the blade 10 of the present invention to the tire vulcanization mold and improving the durability of the plate-shaped portion 230, leading to preventing deformation or damage of the blade 10 due to pressure during vulcanization.

The cross-sectional length, as the longest length between any one point of the edge and the other point of the edge in the cross-sectional shape of the main support body 110 (diameter if the cross-sectional shape of the main support body 110 is a circle) may vary from the top to the bottom of the main support body 110.

In addition, the thickness of the frame 200 may vary from the top to the bottom of the frame 200. In detail, as shown in FIG. 1, the frame 200 may be divided into regions (L1, L2, and L3) at each part, and the thickness of the frame 200 may be different in each region.

Here, the boundaries for dividing each region may differ from the boundaries between the amplitude portions 210 to be described below. That is, the thickness of one amplitude portion 210 may also vary from the top to the bottom.

In a specific embodiment, the thickness of the frame 200 in the L1 region may be formed as 0.3 to 0.4 mm, the thickness of the frame 200 in the L2 region may be formed as 0.2 mm, and the thickness of the frame 200 in the L3 region may be formed as 0.3 to 0.4 mm.

In addition, the cross-sectional length of the main support body 110 may vary as described above, and especially when the main support body 110 is in the shape of a cylinder, a portion of the main support body 110 that supports the L2 region, which is formed with a relatively thin thickness, may have a diameter of 1 mm or more, while each part of the main support body 110 that supports the L1 and L3 regions, which are formed with a relatively thick thickness, may have a diameter of less than 1 mm.

By varying the cross-sectional length of the main support body 110 and the thickness of the frame 200 in this manner, the kerf 30 formed by the blade 10 of the present invention may have a three-dimensional design, leading to increase in the friction force and an improvement in various performance characteristics including interlocking performance.

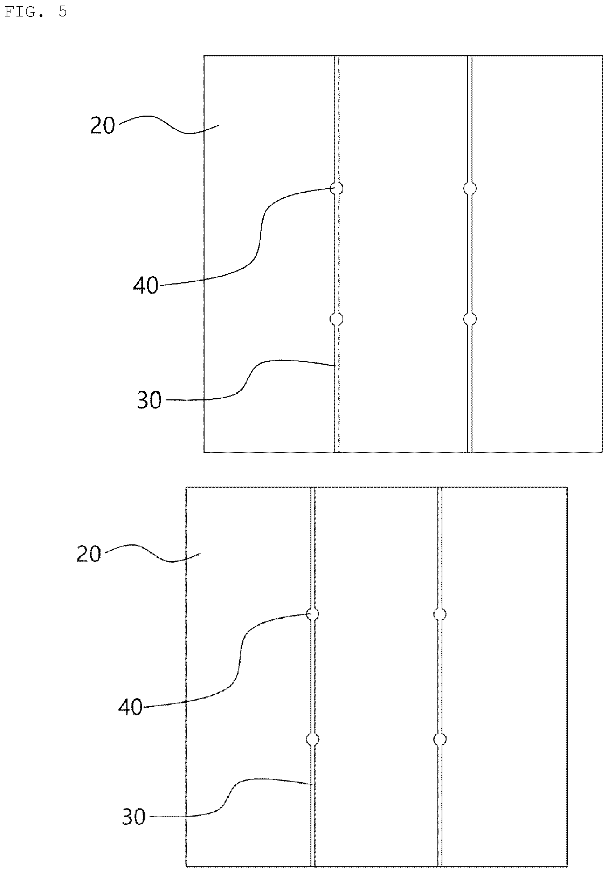

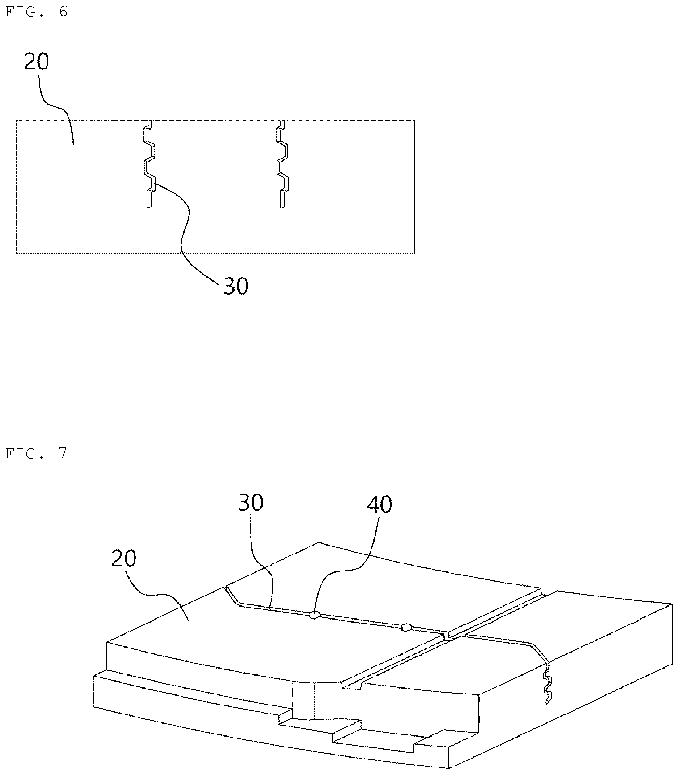

FIG. 4 is a perspective view of a block 20 according to an embodiment of the present invention, FIG 5 is a plan view of the block 20 according to an embodiment of the present invention, and FIG. 6 is a side view of the block 20 according to an embodiment of the present invention.

As shown in FIGS. 4 to 8, a tire may include a block 20 with a thread having a kerf 30 formed in a wave shape extending in the depth direction along with a kerf hole 40 formed extending in the depth direction by means of the blade 10 of the present invention as described above.

When using the blade 10 of the present invention as a part of the vulcanization mode in a vulcanization process of a tire, the kerf 30 may be formed on the block 20 (or rib) by the blade 10 of the present invention, and a kerf hole 40 of a hole shape may be formed by the main support body 110 in the kerf 30.

In addition, the kerf 30 may have a convex portion extending from the wall forming the kerf 30 in the central direction and a corresponding concave portion according to the wave shape as described above, and the convex and concave portions come into contact during driving or braking of the tire to incur an interlocking, resulting in improved braking, rotation and friction performance of the tire.

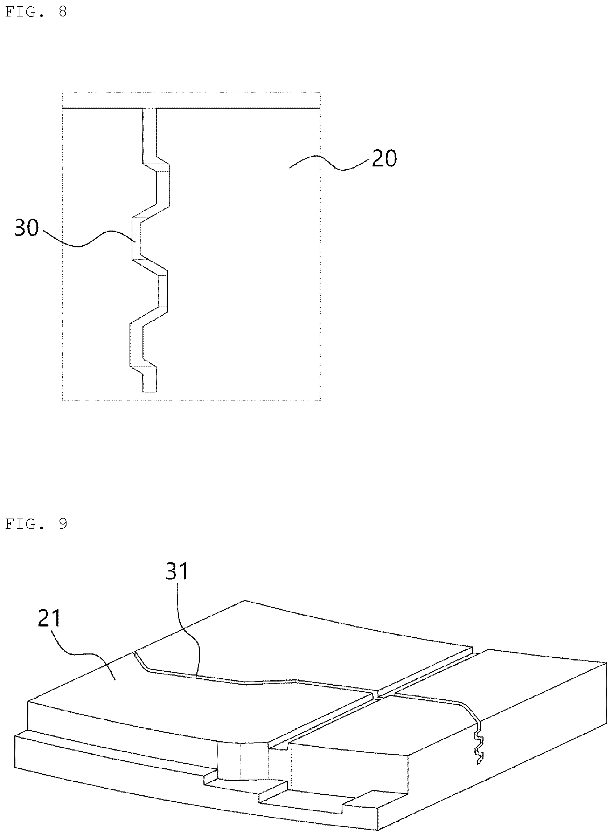

FIG. 7 is a perspective view of the block 20 according to another embodiment of the present invention, and FIG. 8 is a side view of the block 20 according to another embodiment of the present invention. Here, the embodiment shown in FIGS. 7 and 8 may be referred to as embodiment 1 of the present invention. The blade 10 used to form the kerf 30 in embodiment 1 can vary in thickness, with the thickness of the top region L1 being 0.3 mm, the thickness of the middle region L2 being 0.2 mm, and the thickness of the bottom region L3 being 0.3 mm.

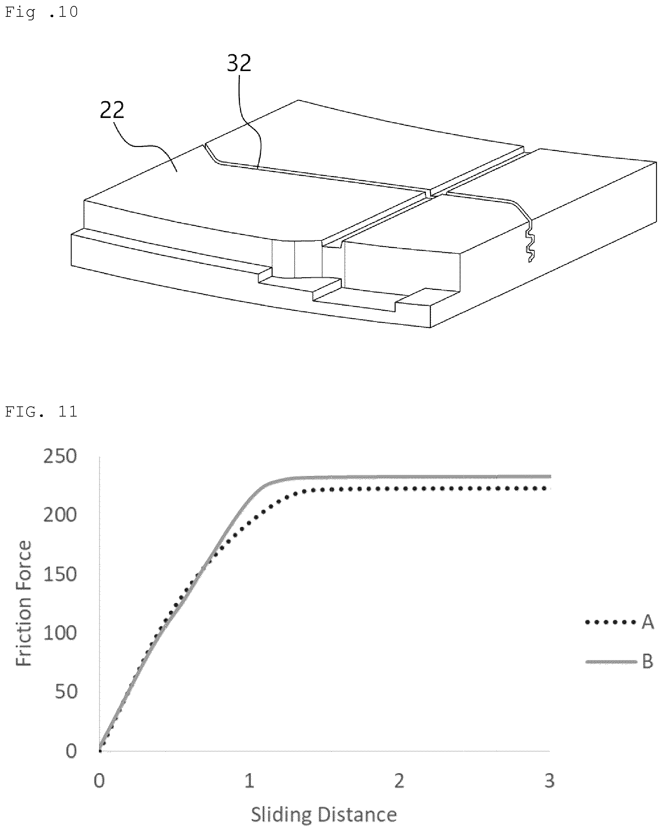

FIGS. 9 and 10 are perspective views of a block according to a comparative example of the present invention.

In detail, FIG. 9 depicts a block 21 of comparative example 1, in which a kerf 31 extending from one side to the other in the block has a bend in its central portion and is uniform in width, compared to the block 20 of embodiment 1. Here, the amplitude portion having the wave shape extending in the depth direction of the kerf 31 may have a trapezoid shape in the cross-sectional view.

That is, in order to form the kerf 31 in the block 21 of comparative example 1, a blade with two bend parts and uniform thickness, in which the support 100 is removed from the blade 10 of the present invention, may be used. Here, the thickness of the blade used to form the kerf 31 in the block 21 of comparative example 1 may be uniform at 0.3 mm.

FIG. 10 illustrates the block 22 of comparative example 2, in which the block 22 of comparative example 2 may have a shape excluding the kerf hole 40 from the block 20 of embodiment 1, compared to the block 20 of embodiment 1.

Thus, in order to form the kerf 32 in the block 22 of comparative example 2, a blade without the support 100 from the blade 10 of the present invention may be used. Here, the thickness variation of the blade used to form the kerf 32 in the block 22 of comparative example 2 may be the same as the thickness variation of the blade 10 in embodiment 1.

In addition, a block of comparative example 3 may be prepared, and the block of comparative example 3 may have a kerf formed as a planar shape without a wave shape extending in the depth direction of the kerf compared to the block 21 of comparative example 1.

That is, a blade with a planar shape may be used to form the kerf of the block in comparative example 3. Here, the thickness of the blade used to form the kerf in comparative example 3 may be fixed to 0.3 mm.

### [Simulation test 1]

Each of the block shapes of embodiment 1 and comparative examples 1 to 3 as described above was created in a finite element analysis program, a load corresponding to the tire contact pressure was applied to each block, and each was moved in the forward and reverse directions.

FIG. 11 is a graph according to test result for each tire block. In detail, FIG. 11 is a graph depicting the relationship between sliding distance and friction force.

In FIG. 11, graph A corresponds to the block in comparative example 3, and graph B corresponds to the block 20 in embodiment 1. It can be observed that the change in the degree of increase of the friction force during the convergence process varies depending on the shape of the kerf.

As shown in FIG. 11, it can be observed that as the sliding distance increases, the block 20 of embodiment 1 using the blade 10 of the present invention shows superior maximum friction force compared to the block equipped with a kerf shape commonly used in tires as in comparative example 3, indicating improved braking performance of a tire equipped with the block 20 incorporating the kerf 30 formed using the blade 10 of the present invention.

### [Simulation test 2]

Each of the block shapes of embodiment 1 and comparative examples 1 and 2 as described above was created in a finite element analysis program, a load corresponding to the tire contact pressure was applied to each block, and each was moved in the forward and reverse directions.

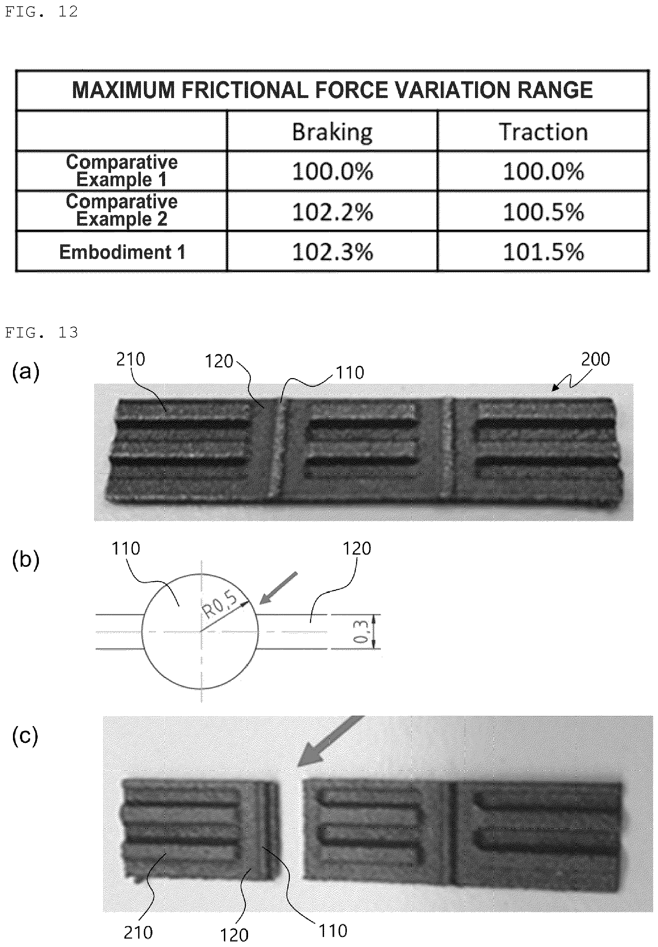

FIG. 12 is a table summarizing data according to simulation test results for each tire block. In detail, FIG. 12 is a table summarizing the data obtained from [Simulation test 2]. The table in FIG. 12 shows the coefficient of friction data derived when the braking force generated during tire braking is applied to each block and the coefficient of friction data derived when the traction force generated during tire driving is applied to each block.

In each table, the maximum frictional force ratio represents the percentage (%) of the maximum frictional force of comparative example 1 and each of the other comparative examples and embodiment 1.

As seen in FIG. 12, it can be observed that the coefficient of friction was improved by 2.3% during braking for the block 20 incorporating the kerf 30 formed using the blade 10 of the present invention.

Also, as seen in FIG. 12, it can be observed that the coefficient of friction was improved by 1.5% during traction for the block 20 incorporating the kerf 30 formed using the blade 10 of the present invention.

Based on the evaluation of applying the blocks of comparative example 1 and embodiment 1 to actual tires, it can be observed that the block 20 of embodiment 1 showed a 6.1% improvement in dry braking performance.

As described above, it can be observed that forming a kerf 30 in a block 20 using the blade 10 of the present invention as described above improves the interlocking performance of the kerf 30, and simultaneously, the formation of a kerf 30 with a relatively thin thickness and minimized design errors in the convex and concave portions of the kerf 30 leads to an improvement in the friction performance of the tire.

FIGS. 13 to 15 are images related to the stress concentration test on the blades according to each embodiment of the present invention.

In detail, FIG. 13 shows a simple connection blade without rounding treatment at the connection portion between the main support body 110 and the connecting member 120, with the cross-sectional radius of the main support body 110 being 0.5 mm and the thickness of the frame 200 being 0.3 mm.

In addition, (a) in FIG. 13 is an image of the simple connection blade, (b) in FIG. 13 is an enlarged view of the connection portion between the main support body 110 and the connecting member 120 of the simple connection blade, and (c) in FIG. 13 is an image of the damage to the simple connection blade when a horizontal force of 115 N perpendicular to the surface of the connecting member 120 is applied to the center of the simple connection blade with both ends fixed. Here, the vertical force perpendicular to the horizontal force is measured to be 32 N.

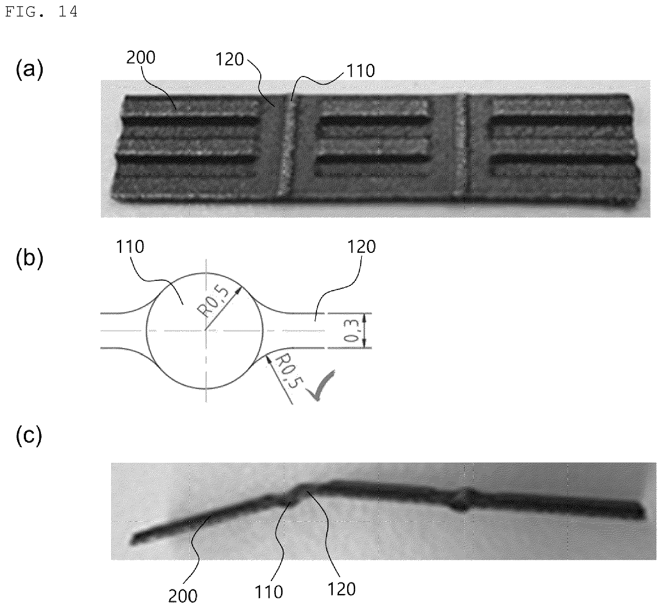

FIG. 14 show a first curvature blade with a first curvature radius rounding treatment at the connection portion between the main support body 110 and the connecting member 120, with the cross-sectional radius of the main body 110 being 0.5 mm, the thickness of the frame 200 being 0.3 mm, and the first curvature radius being 0.5 mm.

In addition, (a) in FIG. 14 is an image of the first curvature blade, (b) in FIG. 14 is an enlarged view of the connection portion between the main support body 110 and the connecting member 120 of the first curvature blade, and (c) in FIG. 14 is an image of the deformation of the first curvature blade when a horizontal force of 125 N perpendicular to the surface of the connecting member 120 is applied to the center of the first curvature blade with both ends fixed. Here, the vertical force perpendicular to the horizontal force is measured as 32 N.

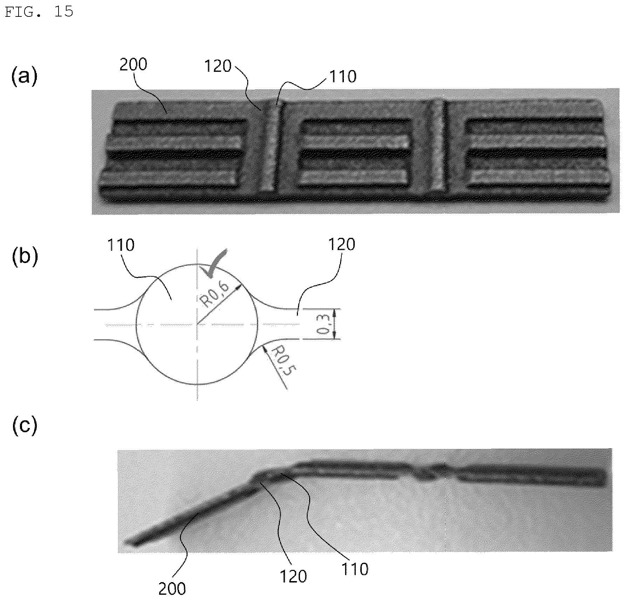

FIG. 15 shows a second curvature blade with a second curvature radius rounding treatment at the connection portion between the main support body 110 and the connecting member 120, with the cross-sectional radius of the main body 110 being 0.6 mm, the thickness of the frame 200 being 0.3 mm, and the first curvature radius being 0.5 mm.

In addition, (a) in FIG. 15 is an image of the second curvature blade, (b) in FIG. 15 is an enlarged view of the connection portion between the main support body 110 and the connecting member 120 of the second curvature blade, and (c) in FIG. 15 is an image of the deformation of the second curvature blade when a horizontal force of 148 N perpendicular to the surface of the connecting member 120 is applied to the center of the second curvature blade with both ends fixed. Here, the vertical force perpendicular to the horizontal force is measured varying between 38 to 46 N.

As seen in FIGS. 13 to 15, which illustrate a simple connection blade, a first curvature blade, and a second curvature blade, the rounding treatment of the connection portion between the main support body 110 and the connecting member 120 improves the durability of the blade 10 of the present invention.

In addition, as shown in the comparison between the first curvature blade and the second curvature blade, increasing the cross-sectional radius of the main support body 110 improves the durability of the blade 10 of the present invention.

The present invention according to the above configuration has the advantage of increasing the durability of a kerf-forming blade for shaping the kerf in a tire, by forming a supporting member between one frame and another to support each frame, thus preventing the deformation of the frames due to the pressure and heat generated during the tire vulcanization process.

The present invention has the advantage of improving the quality of the tire's kerf by minimizing deformation of the kerf after the tire vulcanization process through the improved durability of the kerf-forming blade, achieved by maintaining the shape of the kerf-forming blade during the tire vulcanization process as described above.

It should be understood that the advantages of the present invention are not limited to the aforesaid but include all advantages that can be inferred from the detailed description of the present invention or the configuration specified in the claims.

The above description of the present invention is for illustrative purposes only, and it will be understood by those skilled in the art that various modifications and changes can be made thereto without departing from the spirit and scope of the invention. Therefore, it should be understood that the embodiments described above are exemplary and not limited in all respects. For example, each component described as a single type may be implemented in a distributed manner, and similarly, components described as distributed may be implemented in a combined form.

The scope of the invention are limited only by the scope of the appended claims, and all changes or modifications derived therefrom should be construed as being included in the scope of the present invention.

### DESCRIPTION OF REFERENCE NUMERALS

100: blade
20, 21, 22: block
30, 31, 32: kerf
40: kerf hole
100: support
110: main support body
120: connecting member
200: frame
210: amplitude portion
220: slope portion
230: plate-shaped portion

## Claims

1. A 3-dimensional (3D) blade being installed in a tire vulcanization mold for forming a kerf, the blade comprising:
a frame formed in a shape of a plate having a wave shape in a cross section horizontal to a thickness direction; and
a support formed in a shape of a bar having one side connected to the frame and the other side connected to another frame,
wherein the support prevents the frame from being deformed during a process of vulcanizing a tire.

2. The blade of claim 1, wherein the support comprises:
a main support body having a shape of a bar; and
a connecting member formed between the main support body and the frame to connect the main support body and the frame.

3. The blade of claim 2, wherein the main support body has a cross section in the shape of a circle or a polygon.

4. The blade of claim 3, wherein the cross section of the main support body is a circle having a radius of 0.3 to 1.0 millimeters (mm).

5. The blade of claim 3, wherein the main support body and the connecting member comprise a connecting portion having a curvature surface formed having a predetermined curvature radius.

6. The blade of claim 5, wherein the curvature radius of the connecting portion of the main support body and the connecting member ranges from 0.3 to 1.0 millimeters (mm).

7. The blade of claim 3, wherein the main support body is connected on the outside to an outer plane of the connecting member.

8. The blade of claim 1, wherein the frame comprises at least one amplitude portion formed by depressing a part of one surface and projecting a part of the other surface correspondingly.

9. The blade of claim 8, wherein the frame further comprises a slope portion formed at a connecting portion between the amplitude portion and the support.

10. The blade of claim 8, wherein the frame further comprises a plate portion connected to an end of the amplitude portion and formed in a plate shape.

11. The blade of claim 1, wherein the frame has a thickness equal to or greater than 0.2 mm.

12. A vehicle tire formed using a 3D blade for forming the kerf of claim 1, the vehicle tire comprising:
a block comprising a tread formed therein; and
a kerf formed in the block to have a wave shape extending in the depth direction and comprising a kerf hole formed extending in the depth direction.

## Patentansprüche

1. 3-dimensionales (3D-) Blatt, das in einer Reifenvulkanisierform eingebaut ist, zum Bilden einer Fuge, wobei das Blatt folgende Merkmale aufweist:
einen Rahmen, der in Form einer Platte gebildet ist, die in einem Querschnitt horizontal zu einer Dickenrichtung eine Wellenform aufweist; und
einen Träger, der in Form eines Stabs gebildet ist, dessen eine Seite mit dem Rahmen verbunden ist und dessen andere Seite mit einem anderen Rahmen verbunden ist,
wobei der Träger verhindert, dass der Rahmen während eines Vorgangs eines Vulkanisierens eines Reifens verformt wird.

2. Blatt gemäß Anspruch 1, bei dem der Träger folgende Merkmale aufweist:
einen Hauptträgerkörper, der eine Form eines Stabs aufweist; und
ein Verbindungselement, das zwischen dem Hauptträgerkörper und dem Rahmen gebildet ist, um den Hauptträgerkörper und den Rahmen zu verbinden.

3. Blatt gemäß Anspruch 2, bei dem der Hauptträgerkörper einen Querschnitt in Form eines Kreises oder eines Vielecks aufweist.

4. Blatt gemäß Anspruch 3, bei dem der Querschnitt des Hauptträgerkörpers ein Kreis mit einem Radius von 0,3 bis 1,0 Millimeter (mm) ist.

5. Blatt gemäß Anspruch 3, bei dem der Hauptträgerkörper und das Verbindungselement einen Verbindungsabschnitt aufweisen, der eine Krümmungsoberfläche aufweist, die mit einem vorbestimmten Krümmungsradius gebildet ist.

6. Blatt gemäß Anspruch 5, bei dem der Krümmungsradius des Verbindungsabschnitts des Hauptträgerkörpers und des Verbindungselements im Bereich von 0,3 bis 1,0 Millimeter (mm) liegt.

7. Blatt gemäß Anspruch 3, bei dem der Hauptträgerkörper an der Außenseite mit einer äußeren Ebene des Verbindungselements verbunden ist.

8. Blatt gemäß Anspruch 1, bei dem der Rahmen zumindest einen Amplitudenabschnitt aufweist, der durch entsprechendes Eindrücken eines Teils einer Oberfläche und Hervorheben eines Teils der anderen Oberfläche gebildet ist.

9. Blatt gemäß Anspruch 8, bei dem der Rahmen ferner einen Neigungsabschnitt aufweist, der an einem Verbindungsabschnitt zwischen dem Amplitudenabschnitt und dem Träger gebildet ist.

10. Blatt gemäß Anspruch 8, bei dem der Rahmen ferner einen Plattenabschnitt aufweist, der mit einem Ende des Amplitudenabschnitts verbunden und in einer Plattenform gebildet ist.

11. Blatt gemäß Anspruch 1, bei dem der Rahmen eine Dicke aufweist, die größer oder gleich 0,2 mm beträgt.

12. Fahrzeugreifen, der unter Verwendung eines 3D-Blatts zum Bilden der Fuge gemäß Anspruch 1 gebildet ist, wobei der Fahrzeugreifen folgende Merkmale aufweist:
einen Block, in dem eine Lauffläche gebildet ist; und
eine Fuge, die in dem Block so gebildet ist, dass sie eine Wellenform aufweist, die sich in der Tiefenrichtung erstreckt und in der ein Fugenloch gebildet ist, das sich in der Dickenrichtung erstreckt.

## Revendications

1. Lame tridimensionnelle (3D) installée dans un moule de vulcanisation de pneu pour former une entaille, la lame comprenant:
un cadre formé sous forme de plaque présentant une forme d'onde dans une section transversale horizontale par rapport à une direction de l'épaisseur; et
un support formé sous forme de barre présentant un côté connecté au cadre et l'autre côté connecté à un autre cadre,
dans laquelle le support empêche que le cadre soit déformé pendant un processus de vulcanisation d'un pneu.

2. Lame selon la revendication 1, dans laquelle le support comprend:
un corps de support principal présentant une forme de barre; et
un élément de connexion formé entre le corps de support principal et le cadre pour connecter le corps de support principal et le cadre.

3. Lame selon la revendication 2, dans laquelle le corps de support principal présente une section transversale en forme de cercle ou de polygone.

4. Lame selon la revendication 3, dans laquelle la section transversale du corps de support principal est un cercle présentant un rayon de 0,3 à 1,0 millimètre (mm).

5. Lame selon la revendication 3, dans laquelle le corps de support principal et l'élément de connexion comprennent une partie de connexion présentant une surface de courbure formée de manière à présenter un rayon de courbure prédéterminé.

6. Lame selon la revendication 5, dans laquelle le rayon de courbure de la partie de connexion du corps de support principal et de l'élément de connexion est compris entre 0,3 et 1,0 millimètre (mm).

7. Lame selon la revendication 3, dans laquelle le corps de support principal est connecté à l'extérieur à un plan extérieur de l'élément de connexion.

8. Lame selon la revendication 1, dans laquelle le cadre comprend au moins une partie d'amplitude formée en enfonçant une partie d'une surface et en projetant une partie de l'autre surface en correspondance.

9. Lame selon la revendication 8, dans laquelle le cadre comprend par ailleurs une partie en pente formée au niveau d'une partie de connexion entre la partie d'amplitude et le support.

10. Lame selon la revendication 8, dans laquelle le cadre comprend par ailleurs une partie de plaque connectée à une extrémité de la partie d'amplitude et formée en forme de plaque.

11. Lame selon la revendication 1, dans laquelle le cadre présente une épaisseur égale ou supérieure à 0,2 mm.

12. Pneu de véhicule formé à l'aide d'une lame 3D destinée à former l'entaille selon la revendication 1, le pneu de véhicule comprenant:
un bloc comprenant une bande de roulement formée dans ce dernier; et
une entaille formée dans le bloc de manière à présenter une forme d'onde s'étendant dans la direction de la profondeur et comprenant un trou d'entaille formé s'étendant dans la direction de la profondeur.
